# EUROPEAN PATENT APPLICATION

(11) **EP 1 950 867 A2**
(43) Date of publication of application: **30.07.2008**
(21) Application number: 08154352.2
(22) Date of filing: 30.03.2007
(51) Int. Cl.: H02K 3/47

(54) **Wave winding armature**

(30) Priority: 31.03.2006 US 744096 P; 28.12.2006 US 617483
(62) Divisional of application: 07105414.2
(71) Applicant: Thingap Corporation, Ventura CA 93003 (US)
(72) Inventor: Graham, Gregory S, Ventura, CA 93004 (US); Wedman, Len, Santa Barbara, CA 93103 (US)
(74) Representative: Hill, Justin John

(57) **Abstract**

An armature for an electromotive device having a unitary coil and armature is disclosed. The armature may include a coil having inner and outer wave winding portions separated by an insulator, each of the wave winding portions comprising a plurality of sheet metal conductors, and a commutator having a plurality of sheet metal commutator segments each being integrally formed with one of the conductors. The armature may be fabricated from a pair of conductive sheets by forming in each of the conductive sheets a plurality of conductive bands each having first and second conductor portions, shaping the conductive sheets into inner and outer cylinders, positioning the inner cylindrical conductive sheet inside the outer cylindrical conductive sheet, forming a coil from the first conductor portions of the inner and outer cylindrical conductive sheets, and forming a commutator from the second conductor portions of the inner and outer cylindrical conductive sheets.

## Description

### Cross-Reference to Related Application

This application claims priority to US provisional application Serial No. 60/744,096, filed on March 31, 2006, entitled "Armature for an Electromotive Device," the contents of which are incorporated herein by reference.

### Field

The present disclosure relates to electric machines and, more particularly, to DC and brushless electric motors.

### Background

DC and brushless motors constructed with commutator and coil winding structures typically include a plurality of interconnection components between the coil windings. This is because of how the coil windings must be arranged in order for the motor to operate. Electronic commutation for a DC or brushless motor requires that each magnet in the moving rotor be pushed and pulled around a centerline. To accomplish this, coil sets of conductors are phase-spaced around the diameter of the coil assembly and connected in series by electrical interconnections. Specifically, a plurality of lap-wound coil conductors is arranged in series such that one coil set conductor is oriented adjacent to each of the motor's magnets. A coil assembly for a brush motor is often called an armature. The coil assembly for a brushless motor is often called a stator. Since the coil set conductors are arranged around the diameter of the armature, the interconnections are required between them in order to place them in series. These interconnections represent separate parts in the construction of a motor, which increases the complexity of the motor as well as the complexity, time and cost of manufacturing.

Accordingly, there is a need in the art of DC and brushless motors for a coil and commutator arrangement without the electrical interconnections used in the past. If these electrical interconnections between phase-spaced coil conductors could be eliminated, it could reduce the complexity of the motor armature, improve the reliability of the armature (and thus the motor), and reduce the cost of manufacture.

### SUMMARY

In one aspect of the teachings disclosed herein, an inductive coil for an electromotive device includes a pair of concentric inner and outer sheet metal winding portions. Each of the winding portions comprises a plurality of parallel linear conductive bands with each of the conductive bands of one of the winding portions being coupled to one of the conductive bands of the other winding portion to form a continuous coil.

In another aspect of the teachings disclosed herein, an electromotive device includes an armature having a plurality of inductive coils wherein each inductive coil comprises a pair of concentric inner and outer sheet metal winding portions. Each of the winding portions comprises a plurality of parallel linear conductive bands with each of the conductive bands of one of the winding portions being coupled to one of the conductive bands of the other winding portion to form a continuous coil. Each of the plurality of inductive coils comprises a first end and a second end, wherein each first end is electrically connected to a power source and each second is electrically connected to every other second end.

In a further aspect of the teachings disclosed herein, an inductive coil for an electromotive device includes a pair of concentric inner and outer sheet metal winding portions. Each of the winding portions comprises a plurality of conductive bands each having a first end and a second end offset from the first end by a radial distance about the coil. Each of the conductive bands of one of the winding portions is coupled to one of the conductive bands of the other winding portion.

In yet a further aspect of the teachings disclosed herein, an inductive coil for an electromotive device includes a pair of concentric inner and outer sheet metal winding portions. Each of the winding portions includes a plurality of conductive bands each extending from a first end to a second end in a single radial direction, with each of the conductive bands of one of the winding portions being coupled to one of the conductive bands of the other winding portion.

It is understood that other embodiments of the teachings disclosed herein will become readily apparent to those skilled in the art from the following detailed description, wherein various embodiments are shown and described by way of illustration. As will be realized, the teachings disclosed herein may be applied to other and different embodiments and its several details are capable of modification in various other respects, all without departing from the spirit and scope of the present teachings. Accordingly, the drawings and detailed description are to be regarded as illustrative in nature and not as restrictive.

### BRIEF DESCRIPTION OF THE DRAWINGS

Aspects of the teachings disclosed herein are illustrated by way of example, and not by way of limitation, in the accompanying drawings in which like reference numerals refer to similar elements wherein:

FIGS. 1A and 1B are graphical illustrations exhibiting a plan view of a pair of copper plates, precision cut for use in a brushless motor;

FIG. 2 is a graphical illustration of an elevation perspective view of the copper plate of FIG. 1A rolled into a hollow cylinder for use in a motor;

FIG. 3 is a graphical illustration of an elevation perspective view of the copper plate of FIG. 1B rolled into a hollow cylinder for use in a motor;

FIG. 4 is a graphical illustration of an elevation perspective view of the cylinder of FIG. 2 being inserted into the cylinder of FIG. 3 to form a cylindrical conductive coil for use in a motor;

FIG. 4A is a graphical illustration of an enlargement of a portion of FIG. 4 illustrating detail of a wound glass fiber layer;

FIG. 5 is a schematic illustration of a conductive lap winding to form a continuous cylindrical conductive coil for use in a motor;

FIG. 5A is a graphical illustration of a conductive wave winding to form one phase of a continuous cylindrical conductive coil for use in a motor;

FIG. 5B illustrates a series of connection pads in a portion of a conductive wave winding;

FIG. 5C illustrates connection features in a portion of a conductive wave winding;

FIG. 5D illustrates additional connection features in a portion of a conductive wave winding;

FIG. 5E illustrates a series of lap windings forming spaced phase loops in a prior art conductive coil;

FIG. 6 is a plan view of a commutator;

FIG. 6A is a plan view of an alternative commutator;

FIG. 7 is an exploded perspective view of an ironless core armature with flywheel inserted and a commutator electrically connected to the conductive coil;

FIG. 7A is an exploded perspective view of an ironless core armature with drive shaft and flywheel inserted and an alternative commutator electrically connected to the conductive coil;

FIG. 8 is a perspective view of an assembled ironless core armature with drive shaft and flywheel inserted and a commutator electrically connected to the conductive coil; and

FIG. 8A is a perspective view of an assembled ironless core armature with drive shaft and flywheel inserted and an alternative commutator electrically connected to the conductive coil.

### DETAILED DESCRIPTION

The detailed description set forth below in connection with the appended drawings is intended as a description of various embodiments of the teachings disclosed herein and is not intended to represent the only embodiments to which the present teachings may be applied. The detailed description includes specific details for the purpose of providing a thorough understanding of the present teachings. However, it will be apparent to those skilled in the art that the teachings disclosed herein may be practiced without these specific details. In some instances, well-known structures and devices are shown in block diagram form in order to avoid obscuring the concepts of the present invention. Acronyms and other descriptive terminology may be used merely for convenience and clarity and are not intended to limit the scope of the teachings disclosed herein.

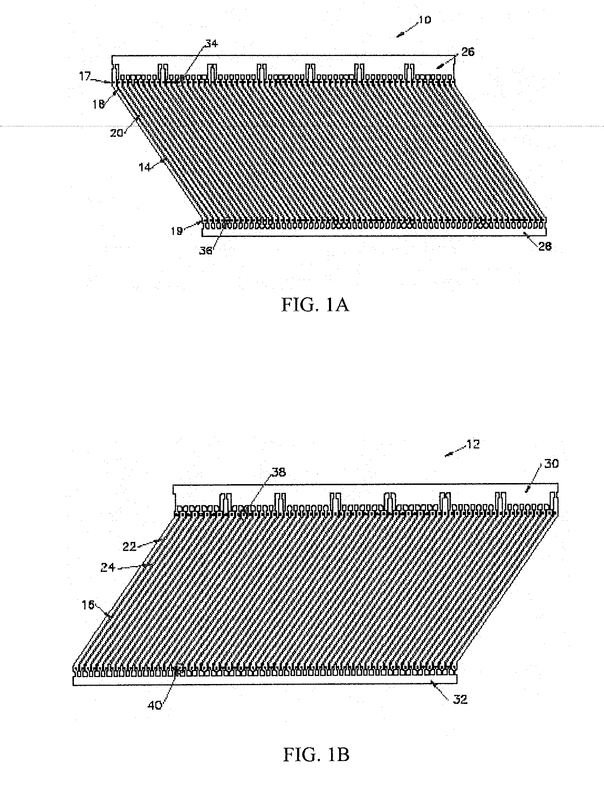

The teachings herein relate to an ironless core armature for an electric commutated DC or brushless motor. The armature may have a conductive coil constructed from a thin pair of nearly mirror image, electrically conductive and precision-machined pieces of bare sheet metal such as sheets or plates 10 and 12 shown in FIGS. 1A and 1B, respectively. Plates 10 and 12 may comprise tempered copper grade 110 with each plate precision cut in a pattern to produce a series of generally parallel and linear conductive bands, 18 and 22. Each conductive band may have a first end and a second end, such as ends 17 and 19 of conductive band 18, for example. The first and second end of each linear conductive band may define a line that is diagonal with respect to the edges of the metal plates 10 and 12 such that when the metal plate is rolled to form a tube, which will be explained in further detail below, the first and second ends are radially offset from one another. For example, when the metal plate is rolled, the first end may be offset by a radial distance of about 90° from the second end. Each band may be separated from the other by an elongated cutout such as cutout 14 of plate 10 and cutout 16 of plate 12 as shown in FIGS. 1A and 1B. The cutouts may be identical and subsequently electrically insulated to prevent electrical contact between neighboring bands such as bands 18 and 20 of plate 12 and bands 22 and 24 of plate 10. The width of a cutout may, for example, be about 1-1.5 times the conductor thickness. The cutout width may be chosen to optimize the current flow and the number of conductive bands that can be precision machined on a copper plate.

Each copper plate may be, though is not limited to, 2 inch by 3 inch (approximately 5 cm by 7.5 cm) and have a thickness of about 0.005 inch (0.12 mm). Those skilled in the art will recognize that the length, width and material thickness can vary depending on the desired motor size. For example, an armature can be manufactured with plates that are 5 inches wide, 30 inches long and 1/2 mm thick. Other dimensions and materials may be used to manufacture conductive plates 10 and 12 provided that such materials and dimensions are consistent with the intended purpose of the teachings disclosed herein.

The desired plate pattern for creating a conductive coil in a wave winding pattern may be achieved by precision cutting the plates by chemical machining to create the pattern of FIGS. 1A and 1B. The pattern may include, for example, a plurality of conductive bands each extending in a substantially linear fashion such that when the plate is rolled as described below, each conductive band extends from a first end to a second in a single radial direction. In other words, when the plate is rolled into a tube shape, each conductive band extends in only one radial direction and does not reverse radial direction between its first and second end. The result, when the plate is rolled into a tube, is that the conductive bands form at least a partial spiral in one radial direction. The desired pattern can be machined by alternate techniques such as water jet cutting, laser cutting, electron beam cutting, fine blanking or conventional machining methods. Each plate may include a carrier strip on each edge, such as carrier strips 26 and 28 of plate 10 and carrier strips 30 and 32 of plate 12. The carrier strips may support the conductive bands at each end during a portion of the manufacturing process and may subsequently be removed, as explained below. The wave winding pattern may also include a series of relatively small holes such as holes 34 and 36 of plate 10 and holes 38 and 40 of plate 12, one on each end of a conductive band. The diameter of each hole may be about 0.25 mm, for example. The total number of holes on each side may equal the number of conductive bands. The total number of holes matches on each side may equal the total number of conductive bands on each plate. Those skilled in the art will recognize that armature coils of this type may be constructed from plates having less or more conductive bands/holes depending on various DC motor operational requirements.

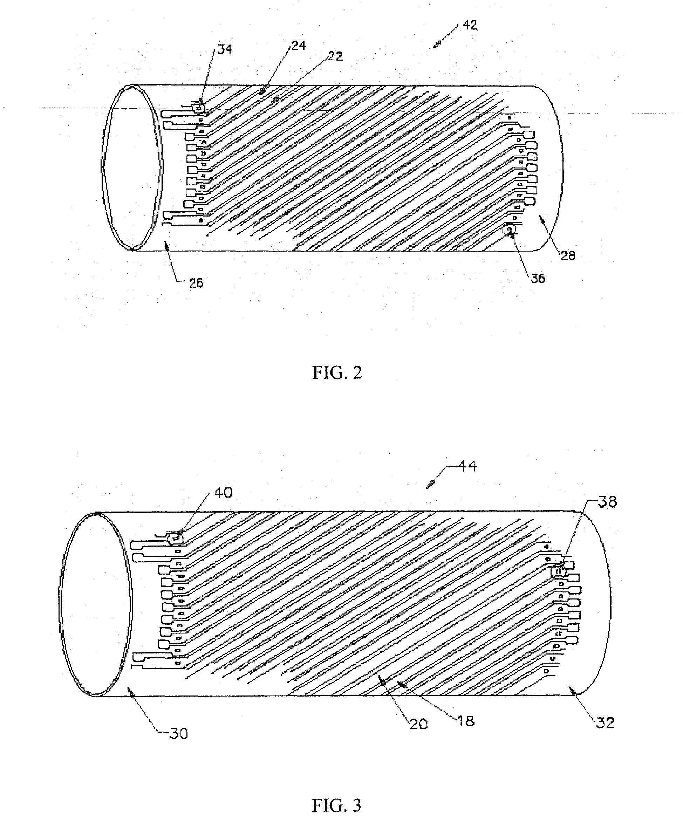

Plate 10 may be rolled into a thin-walled hollow cylindrical shape such as cylinder 42, of FIG. 2. Plate 12 may also be rolled into a thin-walled hollow cylindrical shape such as cylinder 44, of FIG. 3, but with its pattern of conductive bands and cutouts specifically oriented to create a near mirror image of the pattern of conductive bands and cutouts of plate 10. The diameter of cylinder 42 may be about 0.510 inch (approximately 2 cm) and the diameter of cylinder 44 may be about 0.520 inch (approximately 2 cm). Of course, motor requirements may necessitate a variety of different diameters such that an appropriate diameter can exceed 15 inches, for example.

Cylinder 42 may be formed with a slightly smaller diameter to allow subsequent telescoping of the same into cylinder 44 to form a conductive coil. For this reason, cylinder 44 will hereafter be referred to as outer cylinder 44 and cylinder 42 will respectively be referred to as inner cylinder 42. Other size cylinder diameters may be utilized provided that they do not deviate from the intended purpose of the teachings disclosed herein.

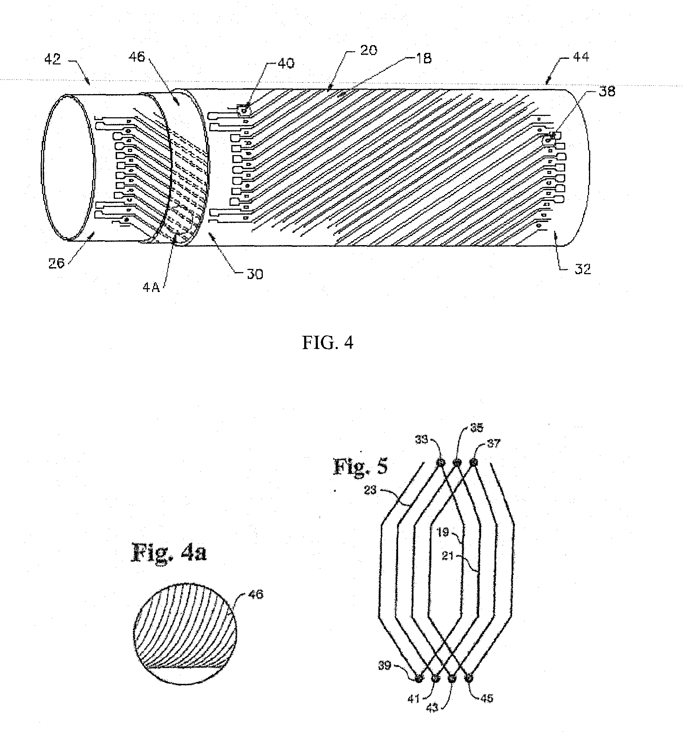

Next, inner cylinder 42 may be placed on a mandrel and four to five layers of fine industrial grade fiberglass strands may be tightly wrapped over the entire outer surface, or any portion of the surface where separation of the conductors is required. In a multilayer coil having more than two layers, fiberglass strands may be wrapped over each of the layers. Fiberglass strand 46, shown in FIG. 4, may have a thickness of between 0.00015 and 0.00075 inch, for example. This fiberglass layer insulates and, at the same time, avoids the interconnect areas of inner cylinder 42. Tightly wrapping multiple layers of fiberglass strands over outer surface of inner cylinder 42 also provides structural support for the tubular structure, and a certain degree of electrical insulation between inner cylinder 42 and outer cylinder 44. For motors requiring higher voltage breakdown resistance, the fiberglass layer thickness may be increased proportional to the voltage requirement.

After wrapping, the fiberglass-wrapped inner cylinder 42 may be inserted all the way into outer cylinder 44 (i.e. inner cylinder 42 and outer cylinder 44 are of equal length) with the insertion carried out so as to ensure concentric and axial alignment of both cylinders and matching of respective holes on each side of inner cylinder 42 with the corresponding holes on each side of outer cylinder 44 (FIG. 4). The next step may be to tightly wrap four to five layers of industrial grade fiberglass strands over the outer surface of outer cylinder 44 in the same way as was done with inner cylinder 42. This fiberglass layer may provide additional structural support. The thickness of the outer cylinder fiberglass layers may be about 0.00075 inch, but can vary. Those skilled in the art will recognize that electrical insulation and armature structural strength required will depend on the application of the DC motor being manufactured. For example, the 0.00075 inch material thickness along with the subsequent encapsulation material (described below) is sufficiently strong to withstand the centrifugal forces of rotational speeds in excess of 30,000 RPM. Voltage breakdown resistance requirements for low voltage DC motors is also met with the .00075 inch material. For voltage breakdown resistance of 500V, a total thickness of .001 inches or more, may be required between the fiberglass thread and the encapsulation material.

After this outer wrapping, the matched holes may be utilized to provide solder flow paths to interconnect pads of each coil segment using, for example, a lead-silvertin solder material which can withstand operational temperatures as high as 450° F. The solder material may be in the form of a solder paste, comprising a slurry of flux and solder. Solder paste may allow for easy placement of the solder with a pressurized syringe and needle applicator. Alternatively, welding may be used instead of soldering to create an interconnect with copper, which would withstand even higher armature temperatures. Alternative methods of joining the matched holes may be used, such as crimping, spot welding or laser welding. If welding is used, the armature operational temperature may rise to about 650 ° F, which is the utilization temperature of the current embodiment of the encapsulation material. The matched solder holes (See FIGS. 1A and 1B) e.g., 34, 36, and 40, 38, respectively, may not be required if solder is not the selected bonding material.

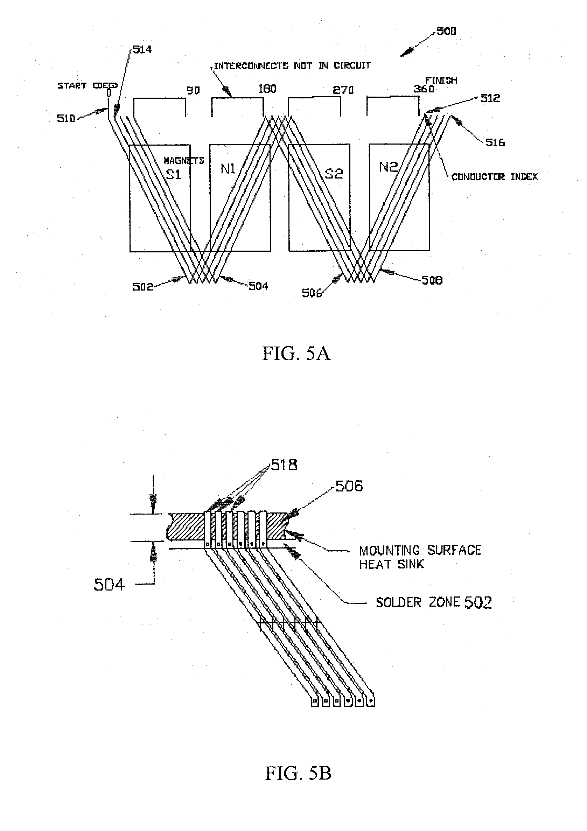

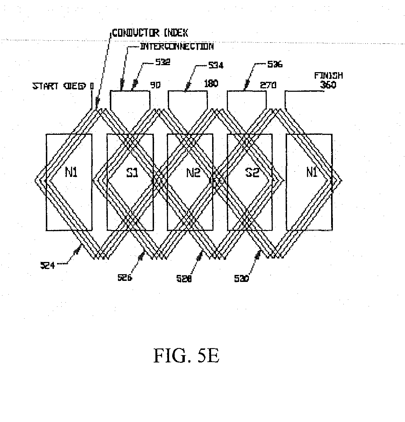

The soldered joints may electrically interconnect all outer cylinder 44 conductive bands with respective inner cylinder 42 conductive bands so as to form a continuous, inductive wave winding structure as shown in FIG. 5A. Because the first end of each linear conductive band may be offset by a radial distance of about 90° from the second end of the linear conductive band, the soldered joints may comprise three connection points so that the continuous, inductive wave winding structure has four sections as illustrated in FIG. 5A, each section spanning about 90° to cover the entire 360° radial distance about the cylinder. The inductive wave winding structure may form a substantially cylindrical conductive coil having one start point and one end point, and winding through 360°, without requiring an interconnect to another conductive coil. This is different from other windings that require electrical interconnects between them to traverse the 360° circumference of the armature. This difference is illustrated, for example, in FIG. 5E, which depicts a series of lap windings forming four spaced phase loops 524, 526, 528, 530 in a prior art conductive coil. The lap windings require interconnections 532, 534, 536 to place the phase spaced loops in series about the 360° circumference of the armature. In a continuous wave winding, on the other hand, interconnections may be eliminated or reduced. A continuous wave winding indexes one conductor width only after the conductor path has progressed 360°. In other words, the wave winding is "continuous" about 360° without having interconnections to other loops. All the necessary electrical connections may therefore be placed within the first 90 degrees.

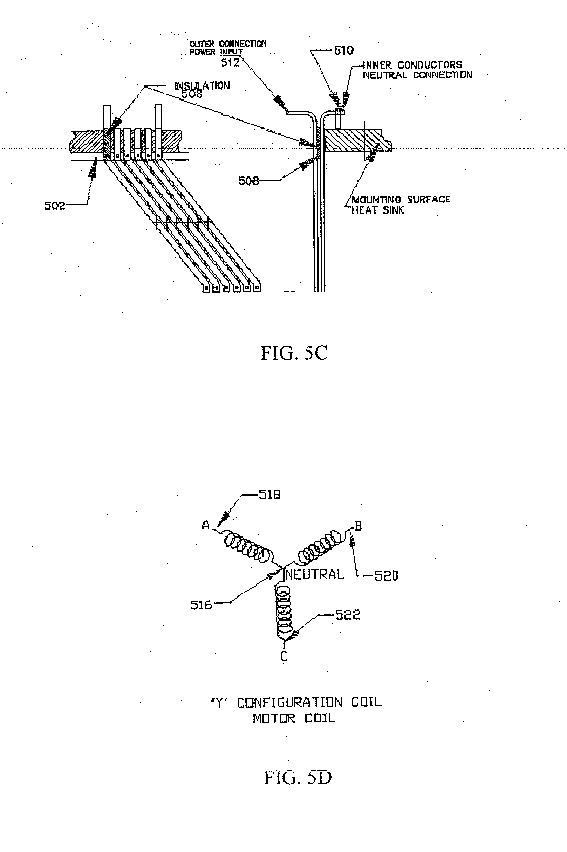

Referring once more to the continuous wave winding disclosed herein, FIG. 5 illustrates in detail how a portion of the wave winding structure is accomplished. For example, inner cylinder 42 conductive band 23 is electrically connected at one end (hole 33) with outer cylinder 44 conductive band 19 and at the other end (hole 41) with outer cylinder conductive band 21. The rest of the inner cylinder 42 conductive bands are similarly interconnected with respective outer cylinder 44 conductive bands with the total number of interconnections at each end being the same. Essentially, the inner cylinder 42 conductive bands provide one half of the electric circuit and the outer cylinder 44 conductive bands provide the other half of the circuit. Joining the two halves completes the electric circuit.

This arrangement is different from coil winding structures having lap-wound coil conductors because the resulting arrangement of coil conductors formed by the wave winding techniques disclosed herein requires significantly fewer interconnections. FIG. 5A illustrates a conductive wave winding that forms one phase of a continuous cylindrical conductive coil. For illustrative purposes, only one of three phases for a three-phase layout is shown in FIG. 5A. Those skilled in the art will recognize that a three-phase layout may be applied in a four pole motor, but that other layouts may be achieved in accordance with the teachings herein as well.

The conductive wave winding 500 may comprise four sections 502, 504, 506 and 508 that, together, form the shape of a "W". Sections 502 and 506 may be formed on inner cylinder 42 shown in FIG. 2. Sections 504 and 508 may be formed on outer cylinder 44 shown in FIG. 3. When the two cylinders are joined at the solder points as described above, the cylindrical conductive coil illustrated in FIG. 5A is formed. The cylindrical conductive coil has a start point, and winds through 360° to complete one winding at point 512. The coil may then be indexed one wire width, to begin its next winding at point 514. This pattern may continue through a plurality of windings until the end point 516 of the conductive coil. Accordingly, the conductive coil formed by the wave winding process disclosed herein has one start point 510 and one finish point 516. In the example shown in FIG. 5A, the conductive coil is indexed four times so that it includes five complete windings. However, those skilled in the art will recognize that different numbers of windings may be used to create each conductive coil. In a three phase layout, two more conductive coils (not shown) may be added, each having its start point between 0° and 90°. The resulting set of conductive coils will cover the entire circumference of the armature, from 0° to 360°. Accordingly, the wave winding armature may comprise three separate conductive coils, "A," "B," and "C," each one having one start point and one finish point. The start and finish points may be used to connect the conductive coils to one another (at a neutral connection) and to input power, as will be described in further detail below. Accordingly, only three interconnections are required for the inductive coils when assembled in an electromotive device.

At each end of the conductive bands on the copper plates that eventually form the inner and outer cylinders, a solder, or connection pad, may be provided. FIG. 5B illustrates a series of connection pads 518 within a solder zone 502. The connection pads may be used as solder points to join the two cylinders together as described above. Although only a small amount of space is required for electrical connection, illustrated in FIG. 5C as the solder zone 502, the connection pads may extended away from each conductor for a distance 504 that allows for bonding to a mounting surface. This extension of the solder pad beyond useful electrical distance provides a surface that the two combined sheet metal pieces may be attached to, i.e. a mounting surface 506. The distance 504 may be selected as any length of exposed conductive band sufficient to create a sturdy bond with the mounting surface 506.

Figure 5A shows a coil start 510 and a coil finish 512. As illustrated in FIG. 5C, solder pads may extend beyond the mounting surface (506 in FIG. 5B), and may be connected to power connections, other coil segments or, alternatively, to the neutral to form a "Y" connection as illustrated in FIG. 5D. In the event the connection must be electrically isolated from the coil conductor under the top conductor, for example in a BLDC motor, insulation may be applied between the those conductors. This configuration can also be wired as a Delta connection.

In addition to serving as a supporting member, the mounting surface 506 may operate as a heat sink. During motor operation, electrical current may create heat in the conductors formed by the conductive bands. This heat may limit the power output capability of the motor. Removing the heat may allow for a higher power output from the motor. Therefore, the extended copper connection pads 500 not only provide for a mounting technique but also provide a path for the removal of heat from the motor. Because copper thermal conductivity is very high, those skilled in the art will recognize that the copper used for the conductive bands is also a suitable material for the connection pads 500. Heat generated by the motor may easily transfer through the extended connection pads 500 to the mounting and heat sink surface 506. The mounting surface may be formed of high thermal transfer material aluminum, for example. Other materials are suitable as well, and those skilled in the art will recognize that any high thermal transfer material will allow for a higher power output motor.

FIG. 5C illustrates connection features in a portion of a conductive wave winding. The start and end points of each phase (A, B and C as described above) may overlap one another in the solder connection zone. Radial space may therefore be required on the several conductors that overlap but cannot be in electrical contact. An insulation material, such as polyimide film, may be used as a spacer 508 when placed in the radial space between the overlapping conductors in the solder zone. Then, the conductive coils may be connected to each other and to input power. To connect to each other, the inner portion 510 of a conductive coil may be connected at what is considered the "neutral." To connect to power, the outer portion 512 of a conductive coil may be used. As illustrated in FIG. 5C, these connection points are extensions of the conductors themselves. The extended inner conductors may be bent inward to connect multiple conductive coils to each other at the "neutral," and the outside conductors may be bent outward to connect each of the conductive coils to input power. FIG. 5D illustrates the "Y" configuration 514 that results from the "neutral" connection 516 between the three inner conductors. The outer end point of each conductor, 518, 520 and 522, may be used to connect to input power as described above.

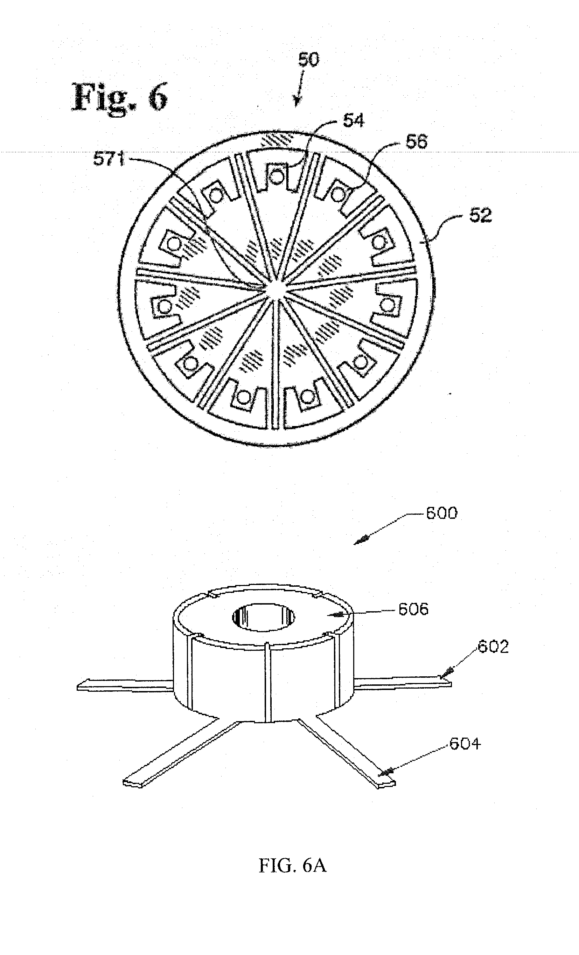

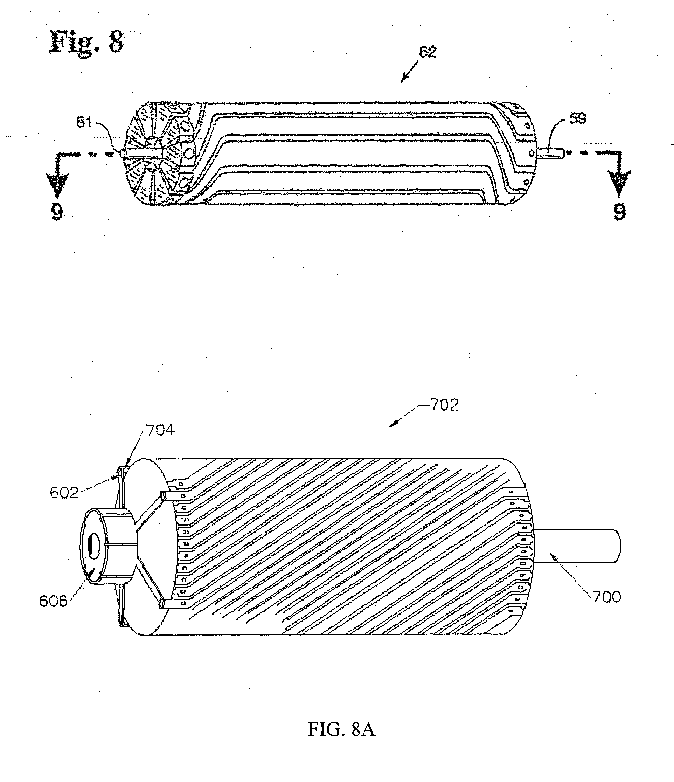

FIG. 6 illustrates a commutator 50 which may be constructed by precision machining a thin metal sheet plate, such as tempered copper alloy like Beryllium/Copper or Silver Copper, in the pattern shown. Commutator 50 may have a carrier ring 52 that may support a plurality of segments such as segments 54, 56, etc. The commutator segments may be soldered to matching solder points on the outside of outer cylinder 44. Commutator 50 may collect current from DC motor brushes and provide power (or distribute current) to the coil circuit of the telescoped cylinder assembly via its current conducting segments. A plurality of tabs at opening 571 and the plurality of segments 54,56, etc., may be bent at 90 degree to the commutating surface using a cold forming tool. This step prepares the commutator ring for solder attachment to the completed armature coil 62 of FIG. 8. Before the commutator mounted, carrier ring 30 from outer cylinder 44 (FIG. 3) and carrier ring 26 from inner cylinder 42 (FIG. 2) may be removed by cold forming in preparation for attaching the commutator ring 50. After soldering or welding the commutator ring 50 to the armature coil 48, the carrier ring 52 (FIG. 6) may be removed from the commutator 50 by cold forming.

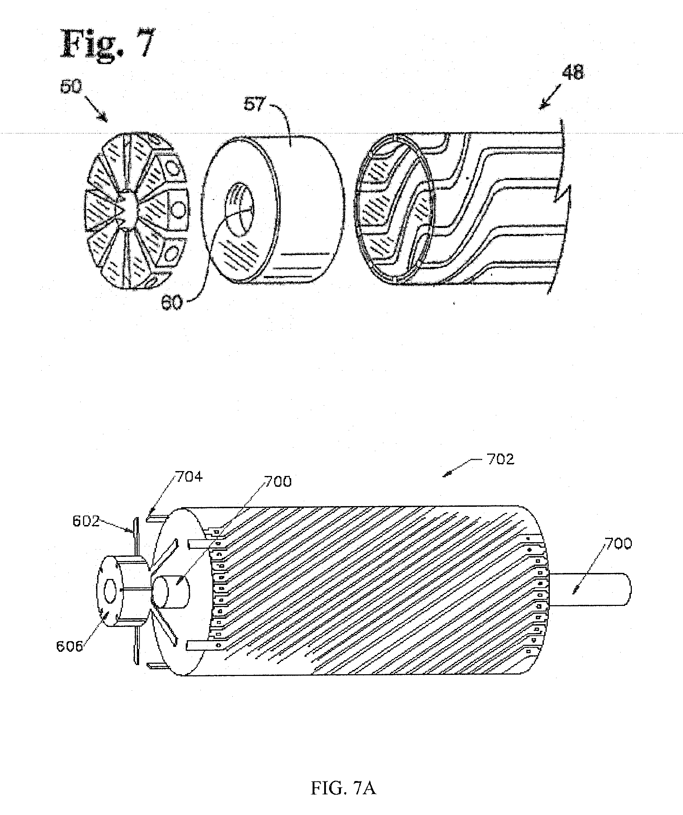

FIG. 6A illustrates an alternative commutator design. A commutator 600 may comprise a plurality of connection legs 602 and 604, for example. The connection legs 602 and 604 extend from a commutation ring 606 and may be attached to extending portions of the conductive coils on an armature as will be described below with reference to FIG. 7A.

Those skilled in the art will recognize that these teachings apply to BLDC motors as well as to DC Brush motors. A BLDC motor differs from the DC Brush motor in that the coil remains stationary during operation, i.e., it is called a stator, while the magnets attached to an output shaft rotate. The BLDC motor does not require a commutator but is commutated electronically. Terminals may therefore be provided at the coil phase attachment points of the coil.

FIG. 7 illustrates an ironless core armature being assembled from a coil 48 (which is the telescoped cylinder assembly described above), a commutator 50 and a disk-shaped flywheel 57. Flywheel 57 may be provided with a circular central opening 60 for fitting a shaft, such as shaft 700 illustrated in FIG. 7A, and may be constructed of high-strength aluminum. Flywheel 57 may be anodized on its exterior surface to create a consistent insulation layer over the outer surface. Flywheel 57 is capable of current and voltage isolation via a non-conductive anodized coating and yet has high thermal mass, thermal conductivity and stiffness to transmit torque and securely fix shaft 700 shown in FIG. 7A. The diameter of flywheel 57 may be slightly smaller than the diameter of the inner cylinder 42 to allow snug fit of the flywheel inside inner cylinder 42 when the flywheel is subsequently pressed into one end of inner cylinder 42. Other materials such as ceramic, high-strength glass and the like may be employed to manufacture the flywheel as long as said materials do not depart from the intended purpose of the teachings disclosed herein.

Those skilled in the art will recognize that the flywheel 57 is applicable to a BLDC stationary coil as well. With the BLDC stationary coil, the flywheel does not turn but becomes the mounting surface of the coil. The mounting surface may be placed at the end of the mandrel used for coil making, which eliminates the need to place the mounting surface into the coil late in the building process. Instead, the mounting surface may be formed at the beginning of the manufacturing process, with the coils being layered over the disc which will subsequently be bonded in place.

As described above, the order of assembly may include first press-fitting flywheel 57 into one of the open ends of coil 48 (FIG. 7). Then flywheel 57 may be inserted inside inner cylinder 42 of coil 48, where it may be held by friction alone. Next, the commutator 50 tabs may be soldered (using the type of solder material as previously described) over the electrically joined interconnections of the telescoped cylinder assembly 48. As determined by the total number of commutator segments and the total number of soldered holes, one segment may service two solder holes (or electrical interconnections) on the telescoped cylinder assembly. Other multiples are also possible. This type of commutator construction allows for a relatively large number of segments to be utilized which results in a reduced number of coils at each switch of the commutator, thereby reducing commutator sparking.

The assembled shaftless armature may then be subjected to encapsulation to provide additional structural stability. Encapsulation may permanently secure all components and provide complete electrical insulation of the armature. Specifically, the shaftless armature may be dipped into a polyimide solution comprised of 25% solid/solute (polyimide) and 75% solvent (NMP). Polyimides are known for their high thermal resistance and are also non-flammable due to their aromatic, halogen-free structure that manifests itself in a very high limited oxygen index (about 38%). When subjected to flame, polyimide has a very low level of smoke formation and toxic gas formation, which makes it a preferred bonding agent for this armature. Polyimide is also chemically resistant to organic solvents such as alcohol, ketones, chlorinated hydrocarbons, and has low moisture absorption.

The dipped armature may then be centrifuged to remove air and replace air voids with the polyimide solution. Centrifugal force may push the air out of the structure and, at the same time, push the polyimide deeper into the crevices and cracks of the telescoped tubular structure, allowing permanent bonding and insulation of the components.

Alternatively, the polymide may be inserted into the coil structure with a rolling technique. While spinning the mandrel and coil structure in parallel with, and touching, another metal (or structural material) round surface, the polyimide material is introduced between the rollers. This forces the material into the openings of the coil structure. This technique is call "milling" material. This milling technique may be used to apply a specific amount of material into the coil.

The polyimide-dipped armature may be heat-cured at about 450° F to remove solvents and to yield a hardened, cured polyimide encapsulation of the armature. The limitation to the curing temperature may be the 550° F solder flow temperature; however, using non-solder welding techniques may allow polyimide curing at 700° F and armature operating temperatures of 650° F. Other potting materials may be used such as ceramic, glass, silicates, silicones, epoxies and the like. After the shaftless armature has been heat-cured, it may be cooled to room temperature. Upon inserting a shaft, the end product is a strong, stiff and fully insulated armature that can be used in any DC or brushless motor application.

FIG. 7A is a perspective view of an ironless core armature with drive shaft and flywheel inserted and an alternative commutator, as depicted in FIG. 6A, electrically connected to the conductive coil. In this alternative design, the commutation ring 606 may attach to the axis 700 of the armature 702. The connection legs, such as connection leg 602, may then be attached to extended portions of the conductive coils, such as extension 704.

FIG. 8 Illustrates a fully assembled freestanding ironless core armature 62 for a DC motor with brushes. Armature 62 may include an axially inserted shaft (not shown) with portions 59 and 61 protruding from each end (also shown as shaft 700 in Fig 8A). Before shaft 58 can be mounted, carrier rings 28 from inner cylinder 42 and carrier ring 32 from outer cylinder 44 (FIGS. 2&3, respectively) may be cut off by cold forming. This removal of the carrier rings 28 and 32 completes the isolation of the individual helical segments thereby creating a continuous coil loop around the armature. Shaft 58 may be constructed from hardened stainless steel grade 17-4PH, and may be press-fit axially inside inner cylinder 42, passing through opening 60 of already mounted flywheel 57 and through opening 571 of already mounted commutator 50. An example of dimensions for shaft 58 are 1/8" diameter by 21/2" length. Other materials and dimensions may be used to manufacture the shaft 58 if said materials do not depart from the intended purpose of the teachings herein. Moreover, those skilled in the art will recognize that a BLDC coil assembly does not require a shaft.

FIG. 8A is a perspective view of an assembled ironless core armature with drive shaft and flywheel inserted and an alternative commutator, as depicted in FIG. 6A, electrically connected to the conductive coil. In this alternative design, the commutation ring 606 attaches to the axis of the armature 702. The connection legs, such as connection leg 602, may then be attached to extended portions of the conductive coils, such as extension 704.

While particular embodiments of the teachings disclosed herein have been illustrated and described, it would be apparent to those skilled in the art that various other changes and modifications can be made without departing from the spirit and scope of the invention. For example, the brushless motor in alternative embodiments may be configured to provide electrical generation when the shaft is rotated by mechanical means. Thus, the teachings disclosed herein are not intended to be limited to the embodiments shown herein but are to be accorded the widest scope consistent with the principles and novel features related by them.

The previous description is provided to enable any person skilled in the art to practice the various embodiments described herein. Various modifications to these embodiments will be readily apparent to those skilled in the art, and the generic principles defined herein may be applied to other embodiments. Thus, the claims are not intended to be limited to the embodiments shown herein, but are to be accorded the full scope consistent with the language of the claims, wherein reference to an element in the singular is not intended to mean "one and only one" unless specifically so stated, but rather "one or more." All structural and functional equivalents to the elements of the various embodiments described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for."

## Claims

1. An inductive coil for an electromotive device, comprising:
a pair of concentric inner and outer sheet metal winding portions, each of the winding portions comprising a plurality of parallel linear conductive bands with each of the conductive bands of one of the winding portions being coupled to one of the conductive bands of the other winding portion to form a continuous coil.

2. The inductive coil of claim 1 wherein the inner and outer sheet metal winding portions are separated by a continuous non-conductive fiber extending around the circumference of the inner winding portion a plurality of times to form an insulation portion.

3. The inductive coil of claim 2 further comprising an encapsulation material that impregnates the winding portions and the insulation layer.

4. The conductive coil of claim 2 wherein the continuous non-conductive fiber strand comprises glass.

5. The conductive coil of claim 3 wherein the encapsulation material comprises polyimide.

6. The inductive coil of claim 1 wherein each of the winding portions comprises precision machined and rolled copper.

7. An electromotive device comprising:
an armature having a plurality of inductive coils wherein each inductive coil comprises a pair of concentric inner and outer sheet metal winding portions, each of the winding portions comprising a plurality of parallel linear conductive bands with each of the conductive bands of one of the winding portions being coupled to one of the conductive bands of the other winding portion to form a continuous coil; and
wherein each of the plurality of inductive coils comprises a first end and a second end, and wherein each first end is electrically connected to a power source and each second is electrically connected to every other second end.

8. The electromotive device of claim 7 wherein the inner and outer sheet metal winding portions are separated by a continuous non-conductive fiber extending around the circumference of the inner winding portion a plurality of times to form an insulation portion.

9. The electromotive device of claim 8 further comprising an encapsulation material that impregnates the winding portions and the insulation layer.

10. The electromotive device of claim 7 wherein the electrically connected second ends of the plurality of inductive coils comprise a neutral connection.

11. The electromotive device of claim 7 wherein the first ends of each of the plurality of inductive coils are arranged within a radial distance of about 90° around the circumference of the armature.

12. The electromotive device of claim 8 wherein the continuous non-conductive fiber strand comprises glass.

13. The electromotive device of claim 9 wherein the encapsulation material comprises polyimide.

14. The electromotive device of claim 7 wherein each of the winding portions comprises precision machined and rolled copper.

15. An inductive coil for an electromotive device, comprising:
a pair of concentric inner and outer sheet metal winding portions, each of the winding portions comprising a plurality of conductive bands each having a first end and a second end offset from the first end by a radial distance about the coil, with each of the conductive bands of one of the winding portions being coupled to one of the conductive bands of the other winding portion.

16. The inductive coil of claim 15 wherein the radial distance is about 90°.

17. The inductive coil of claim 15 wherein the inner and outer sheet metal winding portions are separated by a continuous non-conductive fiber extending around the circumference of the inner winding portion a plurality of times to form an insulation portion.

18. The inductive coil of claim 17 further comprising an encapsulation material that impregnates the winding portions and the insulation layer.

19. The conductive coil of claim 17 wherein the continuous non-conductive fiber strand comprises glass.

20. The conductive coil of claim 17 wherein the encapsulation material comprises polyimide.

21. The inductive coil of claim 15 wherein each of the winding portions comprises precision machined and rolled copper.

22. An inductive coil for an electromotive device, comprising:
a pair of concentric inner and outer sheet metal winding portions, each of the winding portions comprising a plurality of conductive bands each extending from a first end to a second end in a single radial direction, with each of the conductive bands of one of the winding portions being coupled to one of the conductive bands of the other winding portion.

23. The inductive coil of claim 22 wherein the inner and outer sheet metal winding portions are separated by a continuous non-conductive fiber extending around the circumference of the inner winding portion a plurality of times to form an insulation portion.

24. The inductive coil of claim 23 further comprising an encapsulation material that impregnates the winding portions and the insulation layer.

25. The conductive coil of claim 23 wherein the continuous non-conductive fiber strand comprises glass.

26. The conductive coil of claim 24 wherein the encapsulation material comprises polyimide.

27. The inductive coil of claim 22 wherein each of the winding portions comprises precision machined and rolled copper.
